# EUROPEAN PATENT SPECIFICATION

(11) **EP 3 124 357 B1**
(45) Date of publication and mention of the grant of the patent: **20.03.2019**
(21) Application number: 15769356.5
(22) Date of filing: 26.03.2015
(51) Int. Cl.: B62D 5/04, B62D 3/12, B62D 5/00

(54) **UNIT FOR VEHICLE STEERING SYSTEM**
EINHEIT FÜR FAHRZEUGLENKSYSTEM
UNITÉ POUR SYSTÈME DE DIRECTION DE VÉHICULE

(30) Priority: 28.03.2014 JP 2014068407
(43) Date of publication of application: 01.02.2017
(73) Proprietor: NTN Corporation, Osaka-shi, Osaka 550-0003 (JP)
(72) Inventor: KITAYAMA, Naotsugu, Iwata-shi Shizuoka 438-0037 (JP); FUKUNARI, Marina, Osaka-shi Osaka 550-0003 (JP); SATO ,Koji, Iwata-shi Shizuoka 438-0037 (JP); SAITO, Takahide, Iwata-shi Shizuoka 438-0037 (JP)
(74) Representative: Grünecker Patent- und Rechtsanwälte PartG mbB
(86) International application number: PCT/JP2015/059452
(87) International publication number: WO 2015/147200

(56) References cited:
- EP-A1- 1 829 766
- EP-A1- 1 985 520
- EP-A2- 1 445 171
- EP-A2- 1 939 065
- EP-A2- 2 641 813
- DE-A1- 10 015 922
- JP-A- 2001 506 563
- JP-A- 2004 009 989
- JP-A- 2004 009 989
- JP-A- 2006 123 857
- JP-A- 2008 184 004
- JP-A- 2008 239 112
- JP-U- H0 622 151
- US-A1- 2004 039 508

## Description

### TECHNICAL FIELD

This invention relates to a unit for a vehicle steering system through which rotation is transmitted from a steering wheel to a rack and pinion.

### BACKGROUND ART

Steer-by-wire type steering systems are increasingly used in motor vehicles these days. In a typical steer-by-wire type steering system, the steering wheel of the vehicle is not mechanically coupled to the pinion of the rack and pinion through a clutch. Instead, the steering angle of the steering wheel is converted to an electrical signal based on which a controller drives a steering actuator, thereby controlling the steered angles of the steered vehicle wheels. The controller also controls a reaction force motor to apply a suitable steering reaction force to the steering wheel. If abnormality occurs in the steering actuator or the reaction force motor, the steering wheel is coupled to the pinion through the clutch so that the vehicle wheels are directly steered by the steering wheel. (See, for example, the below-identified Patent documents 1 and 2).

Electromagnetically switchable roller clutches are suitable as clutches for use in steer-by-wire type steering systems (such a roller clutch is disclosed in the below-identified Patent document 3).

### PRIOR ART DOCUMENTS

### PATENT DOCUMENTS

**Patent document 1:** JP Patent Publication 2005-262969A
**Patent document 2:** JP Patent 3180505
**Patent document 3:** JP Patent 4252392

Furthermore, document JP 2006123857A is seen as the closest prior art and relates to a steer-by-wire device for a vehicle, wherein a clutch is provided that composes two input shafts, a first input shaft rotated by a steering wheel and a second input shaft driven by an electric motor, and an output shaft connected to a rack and pinion. The clutch mechanism selects between the second input shaft during normal operation and first input shaft when abnormalities are detected.

### SUMMARY OF THE INVENTION

### OBJECT OF THE INVENTION

As shown in Fig, 8, such a conventional steer-by-wire type steering system includes a rotation transmission path which is to be used during an abnormal situation, and which is made up of a first shaft 101 coupled to the steering wheel 100 of the vehicle, a second shaft 103 coupled to the pinion 102 of the rack and pinion, a clutch 104, a universal joint 107 coupling together the first shaft 101 and the input shaft 105 of the clutch 104, and a universal joint 108 coupling together the second shaft 103 and the output shaft 106 of the clutch 104. When rotation is transmitted with the first shaft 101 and the input shaft 105 forming an operating angle relative to each other, and with the second shaft 103 and the output shaft 106 forming an operating angle relative to each other, radial loads are produced, and applied to the input shaft 105 and the output shaft 106 via an intermediate shaft 109 of the universal joint 107 and an intermediate shaft 110 of the universal joint 108, respectively. This makes difficult the centering of the input shaft 105 and the output shaft 106, which is important in operating the clutch 104 in a stable manner.

In view of these circumstances, an object of the present invention is to provide a vehicle steering system of which the clutch mounted between the steering wheel and the pinion can be operated in a stable manner.

### MEANS FOR ACHIEVING THE OBJECT

In order to achieve this object, the present invention provides a unit for a steer-by-wire type vehicle according to independent claims 1 and 4.

### ADVANTAGES OF THE INVENTION

With this arrangement, since either the input shaft of the clutch is fixed to the first shaft while being coaxial with the first shaft, or the output shaft of the clutch is fixed to the second shaft while being coaxial with the second shaft, it is necessary to use only one universal joint either on the side of the output shaft or on the side of the input shaft. This results in radial loads not being generated on one of the output shaft and the input shaft, which in turn makes it possible to operate the clutch in a more stable manner.

### BRIEF DESCRIPTION OF THE DRAWINGS

Fig. 1 schematically shows a unit for a vehicle steering system according to a first embodiment of the present invention.
Fig. 2 is a partial sectional view around a clutch and a pinion of the first embodiment.
Fig. 3 schematically shows a unit for a vehicle steering system according to a second embodiment of the present invention.
Fig. 4 schematically shows a unit for a vehicle steering system according to a third embodiment of the present invention.
Fig. 5 schematically shows a unit for a vehicle steering system according to a fourth embodiment of the present invention.
Fig. 6 schematically shows a unit for a vehicle steering system according to a fifth embodiment of the present invention.
Fig. 7 schematically shows a unit for a vehicle steering system according to a sixth embodiment of the present invention.

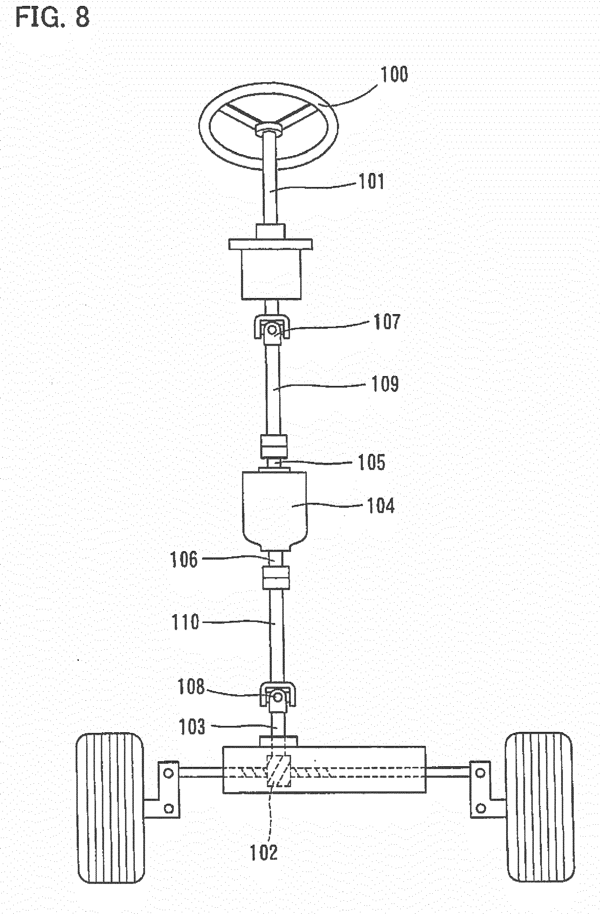

Fig. 8 schematically shows a conventional arrangement.

### BEST MODE FOR EMBODYING THE INVENTION

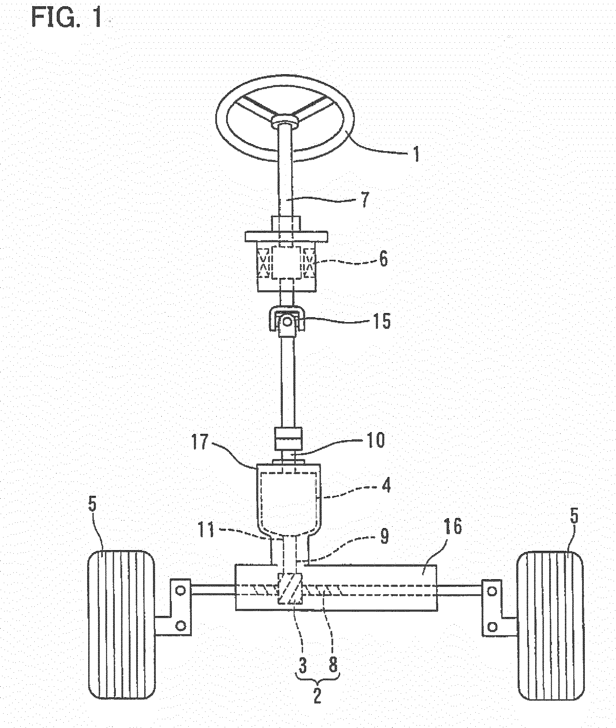

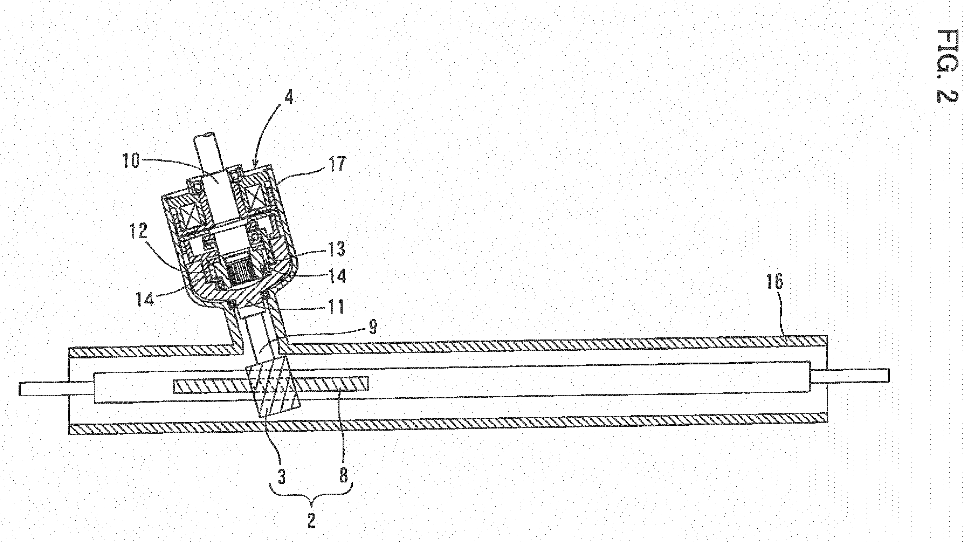

A unit for a vehicle steering system according to the first embodiment of the present invention is now described with reference to Figs. 1 and 2. The vehicle steering system shown is a steer-by-wire type steering system, in which the steering wheel 1 of the vehicle is not mechanically coupled to the pinion 3 of the rack and pinion 2 through a clutch 4. Instead, the steering angle of the steering wheel 1 is converted to an electrical signal based on which the steered angles of the steered wheels 5 are automatically controlled by an electric steering actuator (not shown). Also, based on the electrical signal, a reaction force motor 6 is automatically controlled to apply a suitable steering reaction force to the steering wheel 1. If abnormality occurs in the electric steering actuator or the reaction force motor 6, the steering wheel 1 and the pinion 3 are coupled together through the clutch 4 so that the wheels 5 can be directly steered by the steering wheel 1.

A first shaft 7 is coupled to the steering wheel 1. The reaction force motor 6 applies a steering reaction force to the first shaft 7. The first shaft 7 is integral with the output shaft of the reaction force motor 6, so that the reaction force motor 6 is capable of directly applying the steering reaction force to the first shaft 7. The reaction force motor 6 has a housing mounted to a partition wall between the engine room and the passenger compartment of the vehicle.

The rack and pinion 2 comprises a rack 8, and the pinion 3, which meshes with the rack 8. A second shaft 9 is coupled to the pinion 3. The rack 8 is configured to be driven by the electric steering actuator.

The clutch 4 comprises a mechanical clutch portion, and a clutch switching means for selectively coupling and uncoupling the mechanical clutch portion. The clutch 4 includes an input shaft 10, an output shaft 11, an engaging surface 12 configured to rotate in unison with the input shaft 10, an engaging surface 13 configured to rotate in unison with the output shaft 11, and engaging elements 14 received in wedge-shaped spaces defined between the engaging surfaces 12 and 13. The clutch switching means is controlled by a controller (not shown) of the vehicle steering system. When the engaging elements 14 are brought into engagement with the engaging surfaces 12 and 13 by the clutch switching means, the clutch 4 is coupled, and when the engaging elements 14 are disengaged from the engaging surfaces 12 and 13, the clutch 4 is uncoupled. The clutch 4 may comprise the clutch disclosed in Patent document 1 or Patent document 3.

Torque is always applied from the steering wheel 1 to the input shaft 10 of the clutch 4. While the clutch 4 is coupled, torque from the steering wheel 1 is transmitted to the pinion 3 through the output shaft 11 of the clutch 4.

The input shaft 10 of the clutch 4 and the first shaft 7 are coupled together by a universal joint 15. As the universal joint 15, a constant velocity joint will be sufficient which is capable of transmitting rotation from the first shaft 7 to the input shaft 10 with the shafts 7 and 10 forming a required predetermined operating angle relative to each other. For example, the universal joint 15 may be a double cardan joint.

The output shaft 11 of the clutch 4 is integral with the second shaft 9. The word "integral" here means that the output shaft 11 and the second shaft 9 are formed into a single piece.

The rack and pinion 2 has a housing 16 which is integral with the housing 17 of the clutch 4. The word "integral" here means that the space surrounding the rack and pinion 2, the space surrounding the clutch 4, and the hole through which the output shaft 11 and the second shaft 9 extend forms a single, continuous space. The output shaft 11 is supported by the inner periphery of the housing 17 through a bearing.

In this first embodiment, since the output shaft 11 of the clutch 4 is integral with the second shaft 9, the output shaft 11 and the second shaft 9 are fixed to each other so as to be coaxial with each other, at all times. Thus, the rotation transmission path between the steering wheel 1 and the pinion 3 has no universal joint for coupling together the output shaft 11 and the second shaft 9, and has only the universal joint 15 on the side of the input shaft 10. Thus, with this arrangement, no radial load is applied to the output shaft 11 of the clutch 4, so that the clutch 4 operates more stably. Since there is no universal joint on the side of the output shaft 11, it is also possible to reduce the axial distance between the rack and pinion 2 and the clutch 4, so that the above-mentioned housings can be more easily made integral with each other.

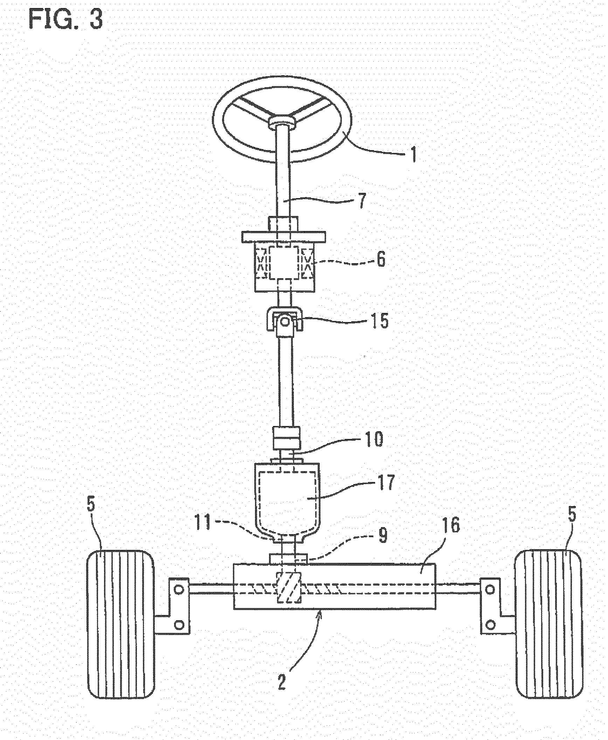

The second embodiment is described with reference to Fig. 3. Here, only what differs from the first embodiment is described. As shown, in the second embodiment, the housing 16 of the rack and pinion 2 and the housing 17 of the clutch 4 are separate members from each other. Even though the housings 16 and 17 are separate members, since the output shaft 11 and the second shaft 9 are integral with each other, the input shaft 10 and the second shaft 9 remain fixed to each other while being coaxial with each other. The housing 17 of the clutch 4 is mounted to the partition wall between the engine room and the passenger compartment of the vehicle.

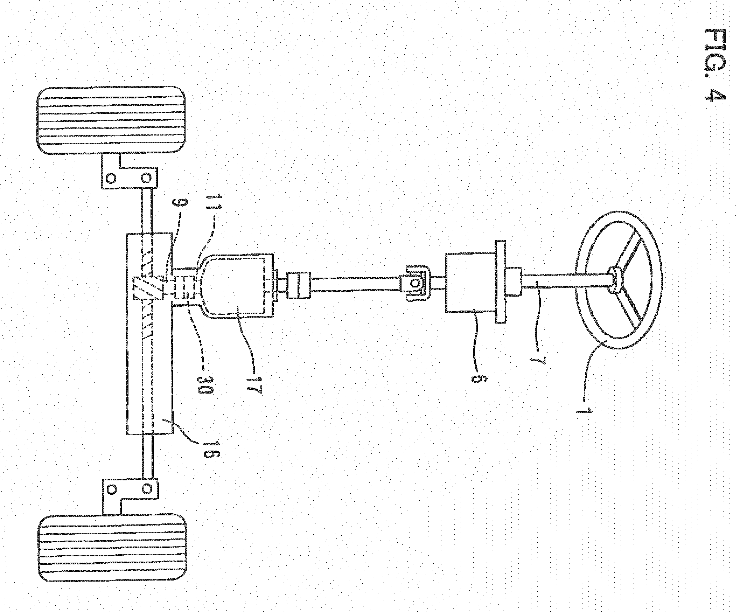

The third embodiment is described with reference to Fig. 4. As shown, in this embodiment, the output shaft 11 of the clutch 4 and the second shaft 9 are fixed to each other while being coaxial with each other, by a coupling means 30. The coupling means 30 are not limited provided the coupling means 30 is capable of transmitting rotation with the output shaft 11 and the second shaft 9 fixed to each other while being coaxial with each other. For example, the coupling means 30 may be serrations, splines and flanges.

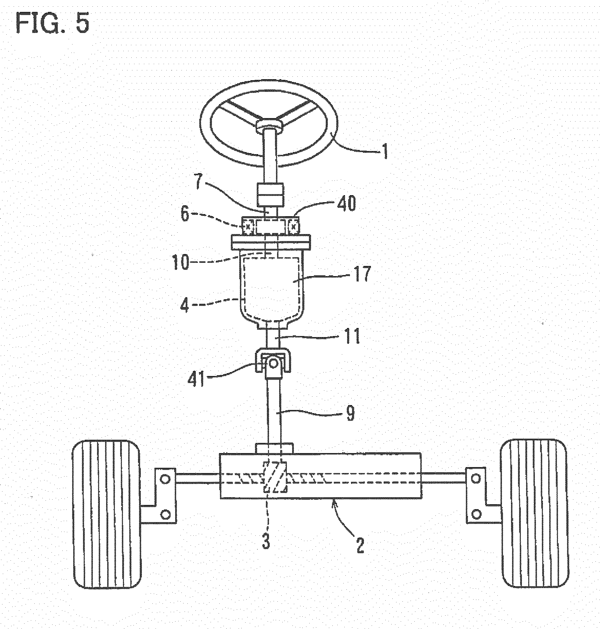

The fourth embodiment is described with reference to Fig. 5. As shown, in this embodiment, the housing 40 of the reaction force motor 6 and the housing 17 of the clutch 4 are integral with each other.

The output shaft 11 of the clutch 4 and the second shaft 9 are coupled to each other by a universal joint 41. The universal joint 41 is a constant-velocity joint capable of transmitting rotation from the output shaft 11 to the second shaft 9 with the output shaft 11 and the second shaft 9 forming a required operating angle relative to each other.

The input shaft 10 of the clutch 4 and the first shaft 7 are integral with each other.

With this arrangement, since the input shaft 10 of the clutch 4 and the first shaft 7 are integral with each other, the input shaft 10 and the first shaft 7 remain fixed to each other while being coaxial with each other, at all times. Thus, the rotation transmission path between the steering wheel 1 and the pinion 3 has no universal joint for coupling together the input shaft 10 and the first shaft 7, and has only the universal joint 41 on the side of the output shaft 11. Thus, with this arrangement, no radial load is applied to the input shaft 10 of the clutch 4, so that the clutch 4 operates more stably. Since there is no universal joint on the side of the input shaft 10, it is also possible to reduce the axial distance between the steering wheel 1 and the clutch 4, so that the above-mentioned housings can be more easily made integral with each other.

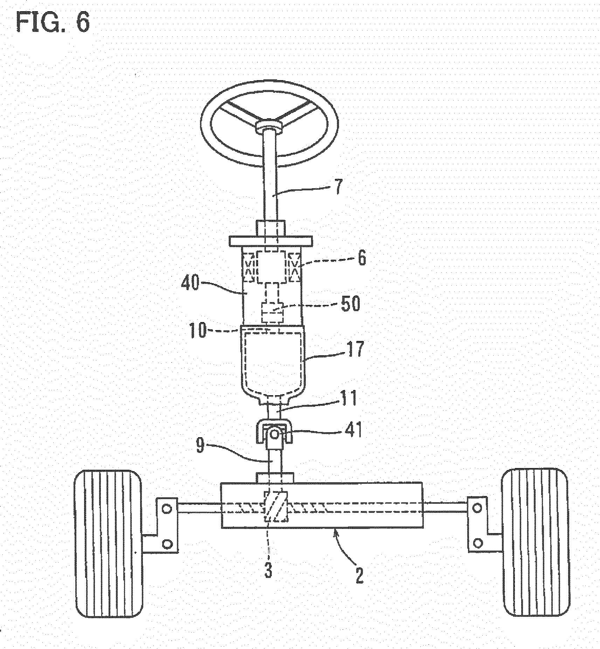

The fifth embodiment is described with reference to Fig. 6. Since the fifth embodiment is a modification of the fourth embodiment, only what differs from the fourth embodiment is described here. In the fifth embodiment, the input shaft 10 of the clutch 4 and the first shaft 7 are fixed to each other while being coaxial with each other, by a coupling means 50. The coupling means 50 is not limited provided the coupling means 50 is capable of transmitting rotation with the input shaft 10 and the first shaft 7 fixed to each other while being coaxial with each other.

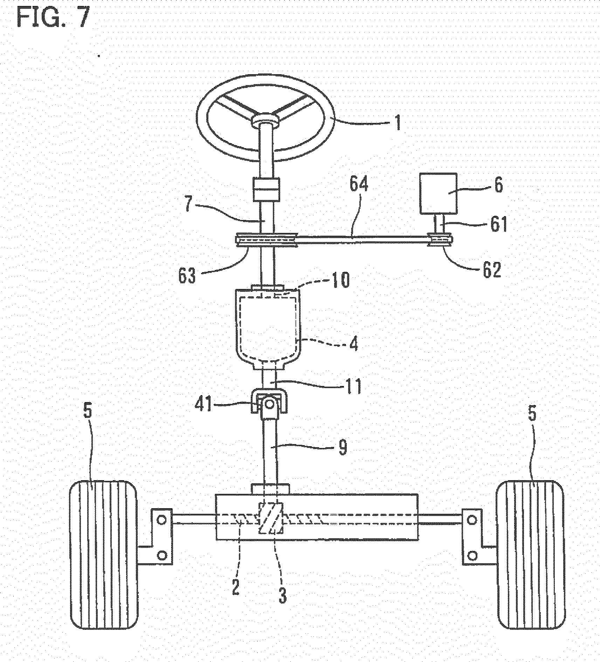

The sixth embodiment is described with reference to Fig. 7. Since the sixth embodiment is a modification of the fourth embodiment, only what differs from the fourth embodiment is described here. In the sixth embodiment, the output shaft 61 of the reaction force motor 6 and the first shaft 7 are separate members from each other. The output shaft 61 carries a driving pulley 62, while the first shaft 7 carries a driven pulley 63. A transmission belt 64 is trained around the driven pulley 63 and the driving pulley 62. A steering reaction force generated by the reaction force motor 6 is transmitted through the driving pulley 62, the transmission belt 64, and the driven pulley 63 to the first shaft 7. As means for applying a steering reaction force using a reaction force motor such as the reaction force motor 6, the one disclosed in Patent document 2 may be used.

The present invention is not limited to the above-described embodiments, and covers every modification thereof within the range defined by the claims.

### DESCRIPTION OF THE NUMERALS

1. Steering wheel
2. Rack and pinion
3. Pinion
4. Clutch
5. Steered wheel
6. Reaction force motor
7. First shaft
8. Rack
9. Second shaft
10. Input shaft of the clutch
11. Output shaft of the clutch
15, 41. Universal joint
16. Housing of the rack and pinion
17. Housing of the clutch
30. 50. Coupling means
40. Housing of the reaction force motor
61. Output shaft of the reaction force motor

## Claims

1. A unit for a steer-by-wire type vehicle steering system comprising:
a first shaft (7) coupled to a steering wheel (1);
a second shaft (9) coupled to a pinion (3) of a rack and pinion (2); and
a clutch (4) mounted in a rotation transmission path between the first shaft (7) and
the second shaft (9),
wherein the clutch (4) comprises a mechanical clutch portion, and a clutch switching means for selectively coupling and uncoupling the mechanical clutch portion,
wherein the mechanical clutch portion includes an input shaft (10), an output shaft (11), a first engaging surface (12) configured to rotate in unison with the input shaft (10), a second engaging surface (13) configured to rotate in unison with the output shaft (11), the first and second engaging surfaces (12 and 13) defining a wedge-shaped space therebetween, and engaging elements (14) received in the wedge-shaped space,
wherein the clutch (4) is configured such that the mechanical clutch portion is coupled when the clutch switching means causes the engaging elements (14) to
engage the first and second engaging surfaces (12 and 13), and such that the mechanical clutch portion is uncoupled when the clutch switching means causes the engaging elements (14) to disengage from the first and second engaging surfaces (12 and 13),
wherein the input shaft (10) of the clutch (4) is coupled to the first shaft (7) through a universal joint (15), and
wherein the output shaft (11) of the clutch (4) is integral with the second shaft (9) while being coaxial with the second shaft (9).

2. The unit for a steer-by-wire type vehicle steering system of claim 1, wherein the clutch (4) has a housing (17) which is integral with a housing (16) of the rack and pinion (2).

3. The unit for a steer-by-wire type vehicle steering system of claim 1, wherein the clutch (4) has a housing (17) which is a separate member either from a housing (40) of a reaction force motor (6) for generating a steering reaction force to be applied to the first shaft (7), or from a housing (16) of the rack and pinion (2).

4. A unit for a steer-by-wire type vehicle steering system comprising:
a first shaft (7) coupled to a steering wheel (1);
a second shaft (9) coupled to a pinion (3) of a rack and pinion (2); and
a clutch (4) mounted in a rotation transmission path between the first shaft (7) and
the second shaft (9),
wherein the clutch (4) comprises a mechanical clutch portion, and a clutch switching means for selectively coupling and uncoupling the mechanical clutch portion,
wherein the mechanical clutch portion includes an input shaft (10), an output shaft (11), a first engaging surface (12) configured to rotate in unison with the input shaft (10), a second engaging surface (13) configured to rotate in unison with the output shaft (11), the first and second engaging surfaces (12 and 13) defining a wedge-shaped space therebetween, and engaging elements (14) received in the wedge-shaped space,
wherein the clutch (4) is configured such that the mechanical clutch portion is coupled when the clutch switching means causes the engaging elements (14) to
engage the first and second engaging surfaces (12 and 13), and such that the mechanical clutch portion is uncoupled when the clutch switching means causes the engaging elements (14) to disengage from the first and second engaging surfaces (12 and 13),
wherein the output shaft (11) of the clutch (4) is coupled to the second shaft (9) through a universal joint (41), and
wherein the input shaft (10) of the clutch (4) is integral with the first shaft (7), while being coaxial with the first shaft (7).

5. The unit for a steer-by-wire type vehicle steering system of claim 4, wherein the clutch (4) has a housing (17) which is integral with a housing (40) of a reaction force motor (6) for generating a steering reaction force to be applied to the first shaft (7).

6. The unit for a steer-by-wire type vehicle steering system of claim 4, wherein the clutch (4) has a housing (17) which is a separate member either from a housing (40) of a reaction force motor (6) for generating a steering reaction force to be applied to the first shaft (7), or from a housing (16) of the rack and pinion (2).

## Patentansprüche

1. Einheit für ein Fahrzeug-Lenksystem vom Steer-by-Wire-Typ, die umfasst:
eine erste Welle (7), die mit einem Lenkrad (1) gekoppelt ist;
eine zweite Welle (9), die mit einem Zahnrad (3) eines Zahnstangengetriebes (2) gekoppelt ist; sowie
eine Kupplung (4), die auf einem Drehungs-Übertragungsweg zwischen der ersten Welle (7) und der zweiten Welle (9) installiert ist,
wobei die Kupplung (4) einen mechanischen Kupplungs-Abschnitt sowie eine Kupplungs-Schalteinrichtung zum selektiven Einkuppeln und Auskuppeln des mechanischen Kupplungs-Abschnitts umfasst,
der mechanische Kupplungs-Abschnitt eine Eingangswelle (10), eine Ausgangswelle (11), eine erste Eingriffs-Fläche (12), die so eingerichtet ist, dass sie sich zusammen mit der Eingangswelle (10) dreht, eine zweite Eingriffs-Fläche (13) enthält, die so eingerichtet ist, dass sie sich zusammen mit der Ausgangswelle (11) dreht, wobei zwischen der ersten und der zweiten Eingriffs-Fläche (12 und 13) ein keilförmiger Raum ausgebildet ist, und sie Eingriffs-Elemente (14) enthält, die in dem keilförmigen Raum aufgenommen sind,
wobei die Kupplung (4) so eingerichtet ist, dass der mechanische Kupplungs-Abschnitt eingekuppelt wird, wenn die Kupplungs-Schalteinrichtung die Eingriffs-Elemente (14) veranlasst, mit der ersten und der zweiten Eingriffs-Fläche (12 und 13) in Eingriff zu kommen, und so, dass der mechanische Kupplungs-Abschnitt ausgekuppelt wird, wenn die Kupplungs-Schalteinrichtung die Eingriffs-Elemente (14) veranlasst, sich von der ersten und der zweiten Eingriffs-Fläche (12 und 13) zu lösen,
die Eingangswelle (10) der Kupplung (4) über ein Kardangelenk (15) mit der ersten Welle (7) gekoppelt ist, und
die Ausgangswelle (11) der Kupplung (4) integral mit der zweiten Welle (9) ausgebildet und dabei koaxial zu der zweiten Welle (9) ist.

2. Einheit für ein Fahrzeug-Lenksystem vom Steer-by-Wire-Typ nach Anspruch 1, wobei die Kupplung (4) ein Gehäuse (17) aufweist, das integral mit einem Gehäuse (16) des Zahnstangengetriebes (2) ausgebildet ist.

3. Einheit für ein Fahrzeug-Lenksystem vom Steer-by-Wire-Typ nach Anspruch 1, wobei die Kupplung (4) ein Gehäuse (17) aufweist, das ein Element ist, das separat von einem Gehäuse (40) eines Gegenwirkungskraft-Motors (6) zum Erzeugen einer auf die erste Welle (7) auszuübenden Lenk-Gegenwirkungskraft oder von einem Gehäuse (16) des Zahnstangengetriebes (2) ist.

4. Einheit für ein Fahrzeug-Lenksystem vom Steer-by-Wire-Typ, die umfasst:
eine erste Welle (7), die mit einem Lenkrad (1) gekoppelt ist;
eine zweite Welle (9), die mit einem Zahnrad (3) eines Zahnstangengetriebes (2) gekoppelt ist; sowie
eine Kupplung (4), die auf einem Drehungs-Übertragungsweg zwischen der ersten Welle (7) und der zweiten Welle (9) installiert ist,
wobei die Kupplung (4) einen mechanischen Kupplungs-Abschnitt sowie eine Kupplungs-Schalteinrichtung zum selektiven Einkuppeln und Auskuppeln des mechanischen Kupplungs-Abschnitts umfasst,
der mechanische Kupplungs-Abschnitt eine Eingangswelle (10), eine Ausgangswelle (11), eine erste Eingriffs-Fläche (12), die so eingerichtet ist, dass sie sich zusammen mit der Eingangswelle (10) dreht, eine zweite Eingriffs-Fläche (13) enthält, die so eingerichtet ist, dass sie sich zusammen mit der Ausgangswelle (11) dreht, wobei zwischen der ersten und der zweiten Eingriffs-Fläche (12 und 13) ein keilförmiger Raum ausgebildet ist, und sie Eingriffs-Elemente (14) enthält, die in dem keilförmigen Raum aufgenommen sind,
wobei die Kupplung (4) so eingerichtet ist, dass der mechanische Kupplungs-Abschnitt eingekuppelt wird, wenn die Kupplungs-Schalteinrichtung die Eingriffs-Elemente (14) veranlasst, mit der ersten und der zweiten Eingriffs-Fläche (12 und 13) in Eingriff zu kommen, und so, dass der mechanische Kupplungs-Abschnitt ausgekuppelt wird, wenn die Kupplungs-Schalteinrichtung die Eingriffs-Elemente (14) veranlasst, sich von der ersten und der zweiten Eingriffs-Fläche (12 und 13) zu lösen,
die Ausgangswelle (11) der Kupplung (4) über ein Kardangelenk (41) mit der zweiten Welle (9) gekoppelt ist, und
die Eingangswelle (10) der Kupplung (4) integral mit der ersten Welle (7) ausgebildet und dabei koaxial zu der ersten Welle (7) ist.

5. Einheit für ein Fahrzeug-Lenksystem vom Steer-by-Wire-Typ nach Anspruch 4, wobei die Kupplung (4) ein Gehäuse (17) aufweist, das integral mit einem Gehäuse (40) eines Gegenwirkungskraft-Motors (6) zum Erzeugen einer auf die erste Welle (7) auszuübenden Lenk-Gegenwirkungskraft ausgebildet ist.

6. Einheit für ein Fahrzeug-Lenksystem vom Steer-by-Wire-Typ nach Anspruch 4, wobei die Kupplung (4) ein Gehäuse (17) aufweist, das ein Element ist, das separat von einem Gehäuse (40) eines Gegenwirkungskraft-Motors (6) zum Erzeugen einer auf die erste Welle (7) auszuübenden Lenk-Gegenwirkungskraft oder von einem Gehäuse (16) des Zahnstangengetriebes (2) ist.

## Revendications

1. Unité destinée à un système de direction de véhicule de type direction électrique câblée (steer-by-wire) comprenant :
un premier arbre (7) couplé à un volant (1) ;
un deuxième arbre (9) couplé à un pignon (3) d'une crémaillère (2) ; et
un embrayage (4) installé sur une voie de transmission de rotation entre le premier arbre (7) et le deuxième arbre (9),
dans laquelle, l'embrayage (4) comprend une partie d'embrayage mécanique, et un moyen de commutation d'embrayage pour coupler et découpler sélectivement la partie d'embrayage mécanique,
dans laquelle la partie d'embrayage mécanique inclut un arbre d'entrée (10), un arbre de sortie (11), une première surface de mise en contact (12) configurée pour tourner de concert avec l'arbre d'entrée (10), une deuxième surface de mise en contact (13) configurée pour tourner de concert avec l'arbre de sortie (11), les première et deuxième surfaces de mise en contact (12 et 13) définissant un espace en forme de coin entre celles-ci, et des éléments de mise en contact (14) reçus dans l'espace en forme de coin,
dans laquelle l'embrayage (4) est configuré de sorte que la partie d'embrayage mécanique est couplée lorsque le moyen de commutation d'embrayage fait entrer en contact les éléments de mise en contact (14) avec
les première et deuxième surfaces de mise en contact (12 et 13), et de sorte que la partie d'embrayage mécanique est découplée lorsque le moyen de commutation d'embrayage fait se découpler les éléments de mise en contact (14) des première et deuxième surfaces de mise en contact (12 et 13),
dans laquelle l'arbre d'entrée (10) de l'embrayage (4) est couplé au premier arbre (7) via une rotule universelle (15), et
dans laquelle l'arbre de sortie (11) de l'embrayage (4) fait partie intégrante du deuxième arbre (9) tout en étant coaxial avec le deuxième arbre (9).

2. L'unité destinée à un système de direction de véhicule de type direction électrique câblée (steer-by-wire) de la revendication 1, dans laquelle l'embrayage (4) présente un boîtier (17) qui fait partie intégrante d'un boîtier (16) de la crémaillère (2).

3. L'unité destinée à un système de direction de véhicule de type direction électrique câblée (steer-by-wire) de la revendication 1, dans laquelle l'embrayage (4) présente un boîtier (17) qui est un élément séparé soit d'un boîtier (40) d'un moteur de force de réaction (6) pour générer une force de réaction de direction à appliquer au premier arbre (7), soit d'un boîtier (16) de la crémaillère (2).

4. Unité destinée à un système de direction de véhicule de type direction câblée (steer-by-wire) comprenant :
un premier arbre (7) couplé à un volant (1) ;
un deuxième arbre (9) couplé à un pignon (3) d'une crémaillère (2) ; et
un embrayage (4) installé sur une voie de transmission de rotation entre le premier arbre (7) et le deuxième arbre (9),
dans laquelle, l'embrayage (4) comprend une partie d'embrayage mécanique, et un moyen de commutation d'embrayage pour coupler et découpler sélectivement la partie d'embrayage mécanique,
dans laquelle la partie d'embrayage mécanique inclut un arbre d'entrée (10), un arbre de sortie (11), une première surface de mise en contact (12) configurée pour tourner de concert avec l'arbre d'entrée (10), une deuxième surface de mise en contact (13) configurée pour tourner de concert avec l'arbre de sortie (11), les première et deuxième surfaces de mise en contact (12 et 13) définissant un espace en forme de coin entre celles-ci, et des éléments de mise en contact (14) reçus dans l'espace en forme de coin,
dans laquelle l'embrayage (4) est configuré de sorte que la partie d'embrayage mécanique est couplée lorsque le moyen de commutation d'embrayage fait entrer en contact les éléments de mise en contact (14) avec
les première et deuxième surfaces de mise en contact (12 et 13), et de sorte que la partie d'embrayage mécanique est découplée lorsque le moyen de commutation d'embrayage fait se découpler les éléments de mise en contact (14) des première et deuxième surfaces de mise en contact (12 et 13),
dans laquelle l'arbre de sortie (11) de l'embrayage (4) est couplé au deuxième arbre (9) via une rotule universelle (41), et
dans laquelle l'arbre de d'entrée (10) de l'embrayage (4) fait partie intégrante du premier arbre (7), tout en étant coaxial avec le premier arbre (7).

5. L'unité destinée à un système de direction de véhicule de type direction électrique câblée (steer-by-wire) de la revendication 4, dans laquelle l'embrayage (4) présente un boîtier (17) qui fait partie intégrante d'un boîtier (40) d'un moteur de force de réaction (6) pour générer une force de réaction de direction à appliquer au premier arbre (7).

6. L'unité destinée à un système de direction de véhicule de type direction électrique câblée (steer-by-wire) de la revendication 4, dans laquelle l'embrayage (4) présente un boîtier (17) qui est un élément séparé soit d'un boîtier (40) d'un moteur de force de réaction (6) pour générer une force de réaction de direction à appliquer au premier arbre (7), soit d'un boîtier (16) de la crémaillère (2).
